Europäisches Patentamt

European Patent Office

Office européen des brevets

(19)

(11) Publication number: **0 138 570**
A2

(12) # EUROPEAN PATENT APPLICATION

(21) Application number: **84306907.1**

(51) Int. Cl.⁴: **A 01 K 11/00**

(22) Date of filing: **10.10.84**

(30) Priority: **10.10.83 NZ 205908**

(71) Applicant: **Allflex International Ltd., 931 Tremaine Avenue, Palmerston North (NZ)**

(72) Inventor: **Reggers, Charles Gerardus, Midhurst Street, Palmerston North (NZ)**
Inventor: **Cohr, Lindsay William John, Aranui Road R.D. 5, Palmerston North (NZ)**
Inventor: **Scott, Michael John, 9 Nelson Street, Feilding (NZ)**

(43) Date of publication of application: **24.04.85**
**Bulletin 85/17**

(84) Designated Contracting States: **BE CH DE FR GB IT LI NL SE**

(74) Representative: **Ablewhite, Alan James et al, MARKS & CLERK 57/60 Lincoln's Inn Fields, London WC2A 3LS (GB)**

(54) **An applicator tool.**

(57) An applicator tool for applying an ear tag to an animal, the applicator having retention means (33, 36) which is adapted to, in use, retain a part of an ear tag and pass it through an animal's ear. The applicator includes means (44) for engagement of an animal's ear on a side opposite that to which the retention means first penetrates the ear and means (12, 26, 24, 21) to cause relative movement of the retention means (33,36) and engagement means (44) toward one another. The engagement means (44) are adapted to cause at least a portion of the ear tag part retained by the retention means (33, 36) to be compacted during passage through the ear of an animal.

- 1 -

## AN APPLICATOR TOOL

This invention relates to an applicator tool and more particularly to an applicator tool for the applying of an ear· tag to the ear of an animal.

A well known category of animal ear tag is the one-piece flexible tag which is normally applied to an animal by a trocar applicator tool. Such tags and trocar applicator tools are well known and examples of these can be found in U.S. Patent Specifications 3,552,051, 3,694,949 and 3,512,289. This type of tag relies for retention in the animal's ear on a head portion which is of relatively large width compared to the slit or opening which is formed in the animal's ear during application of the tag. As illustrated in the aforementioned patent specifications the trocar applicator tool is usually a hand held appliance and in use is speared through the animal's ear to take with it the hed portion of the tag. Accordingly the tool not only forms the opening in the animal's ear but simultaneously locates the head portion of the tag through the opening. In recent times the trocar applicator has been formed as part of a pliers type to facilitate easier application of the tag by the farmer. Unfortunately such applicator tools have been extremely bulky and are thus unwieldy in use.

To facilitate application of the head portion of the tag the trocar is constructed such that it retains the head portion in a compact manner. Accordingly the slit which is formed in the animal's ear by the trocar is of overall smaller dimensions than the head portion once the trocar has been withdrawn from the ear and the head portion has assumed its normal configuration (see for example U.S. Patent Specification 3,552,051). Because the part of the trocar tool which forces the head portion into a compact array actually passes through the animal's ear the slit is necessarily of relatively large size with the result that a wound is formed in the ear which takes time to heal and because of its size is very succeptible to infection. During this healing process there is always the possibility that the head portion of the tag can become dislodged with the consequential loss of the tag.

The object of the present invention is to provide an applicator tool which is useful for the applying of trocar type ear tags and which incorporates means to compact the head portion of the ear tag during passage thereof through the animal's ear.

According to one broad aspect of the invention there is provided an applicator tool for applying an ear tag to an animal comprising tag retention means adapted to, in use, retain a part of an animal ear tag and pass it through an animal's ear, means to engage an animal's ear on a side opposite to that which the retention means first penetrates, means to cause relative movement of the retention means and engagement means toward one another, said engagement means being adapted to cause at least a portion of the ear tag part retained by the retention means to be compacted during the passage through the ear of an animal.

In a preferred form of the invention the retention means is held stationary whilst the engagement means is moved toward the retention means, such movement preferably being rectilinear. The retention means can take the form of an elongate element which has a lug, spigot or the like adapted to be engaged in an opening in the tag part. According to a preferred form the elongate element is pivotally mounted so that it can be pivoted away from the line of movement of the engagement means.

The engagement means preferably consists of a pressure pad which can bear against the animal's ear. This pressure pad includes an opening through which the retention means can pass, said opening being of a cross-sectional dimension which is less than that of the ear tag part held by the retention means.

In the following more detailed description of the invention reference will be made to the accompanying drawings in which:-

Figure 1 is a sectioned side elevational view of a preferred form of the applicator tool according to the invention,

Figure 2 is a partially cut-away plan view of the arrangement shown in Figure 1,

Figure 3 is a detail view of the pivot couplings of the lever and a toothed quadrant of the applicator tool as shown in Figures 1 and 2, and

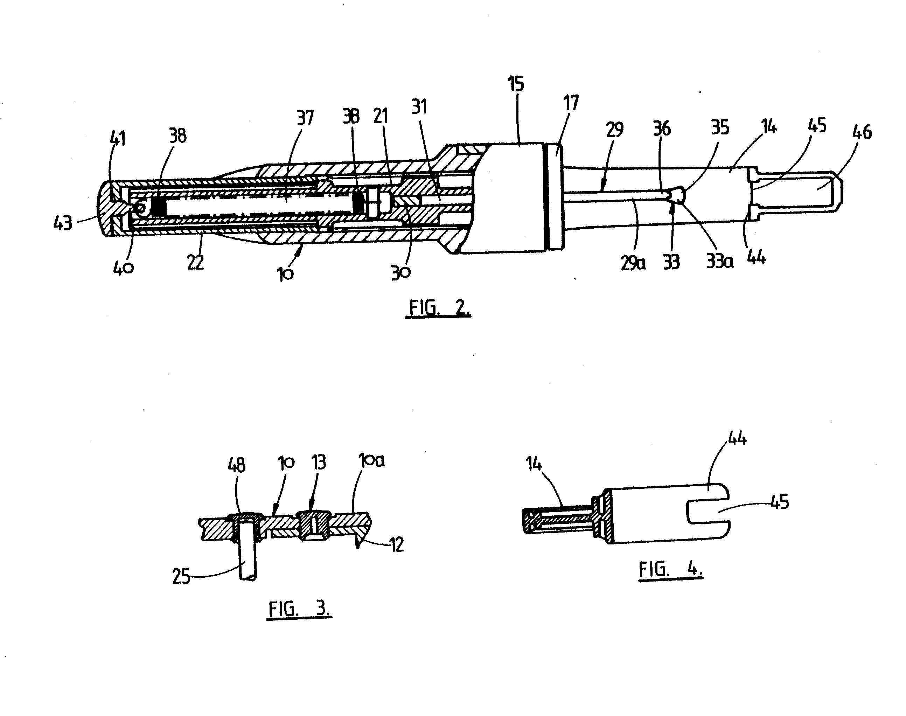

Figure 4 is a sectioned view of the anvil.

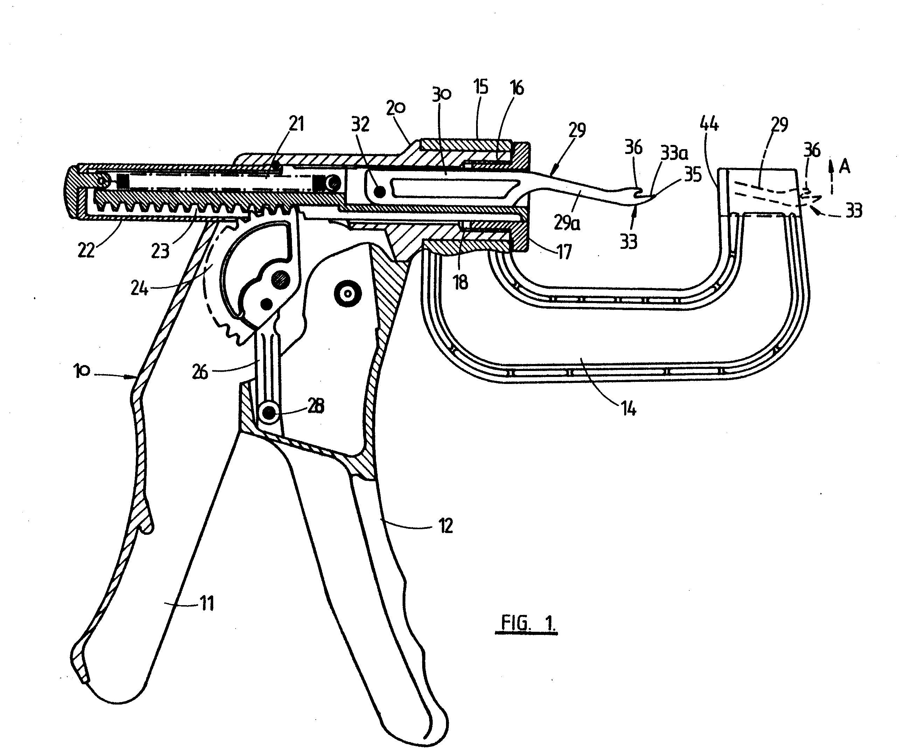

The applicator tool according to the present invention can conveniently be constructed as a pliers type tool. Accordingly in the embodiment illustrated in the drawings the tool consists of a body 10 which has a handle 11 extending therefrom. A lever 12 is pivotally coupled at its upper end within the body 10 by pivot pin 13. Spring means (as hereinafter described) normally urge the lever 12 away from handle 10 so that it takes up the position illustrated in Figure 1.

An anvil 14 which is of generally U shape is mounted by the body 10 and this is conveniently facilitated by an annular end portion 15 of the anvil 14 being located on a projecting circular cross-section portion 16 of the body 10. A flanged end cap 17, which as hereinafter described also functions as a bearing, is screwed into the threaded opening 18 in body portion 16 to thereby hold the anvil in place. To prevent rotation of the anvil a lug 19 projecting from the annular end portion 15 engages in a correspondingly shaped recess in the upstanding portion 20 of the body 10.

Slidingly located within the body 10 is an elongate movable member 21. This member 21 is slidingly located at its foreward end by the bearing end cap 17 whilst the rearward end thereof is located within a tubular cover 22 which projects from the back of the body 10. A toothed rack 23 is formed in the elongate member 21 and this meshes with a toothed quadrant 24 which is pivotally mounted in the body 10 about a pivot pin 25. A link 26 is pivotally coupled at one end about pivot pin 27 to quadrant 24 and at its other end to a pivot pin 28 carried by lever 12. When lever 12 is pivoted about its pivot pin 13 (i.e. so as to move toward handle 11) this movement is transmitted to the elongate member 21 via link 26 and toothed quadrant 24 thereby causing the elongate member 21 to move rectilinearly toward the free end of the anvil 14.

A needle 29 is mounted to elongate member 21 and preferably the mounting is by way of a pivot pin 32. In the preferred form of the invention needle 29 projects from a body portion 30 which fits within a recess 31 in the forward end of the elongate member 21. When the tool is in the configuration as shown in Figure 1 of the drawings the body portion 30 by being within the confines of the bore of end cap 17 is prevented from pivoting about pivot pin 32, however, when the elongate member 21 has been moved to project from the body such that the end of the needle 29 is in the position shown in dotted detail then the body portion 30 has been moved clear of the confines of the bore of end cap 17 so that the needle 29 can pivot upwardly in the direction of arrow A.

The extreme end 33 of needle 29 is suitably profiled by, for example, it being sharpened to the point, however, in the preferred form of the invention the extreme end portion is profiled into what can be termed a spoon shaped profile. This can be more clearly seen in Figure 2 of the drawings wherein the extreme end 33 is flattened to have an overall transverse dimension which is greater than the transverse thickness of the needle 29 itself. When viewed in side elevation, however, (i.e. as seen in Figure 1) the leading edge of the end portion 33 curves downwardly and backwardly toward the body 29a of the needle 29 from a sharpened edge 35. When viewed in plan this sharpened edge 35 is of straight or slightly curved configuration.

Projecting from the needle 29 adjacent the profiled end 33 is a lug 36. This lug 36 projects forwardly but as can be seen from Figure 2 of the drawings is of a transverse thickness no greater than the body 34 of the needle 29 and by being positioned above the end portion 33 is located within the confines of the transverse width of end portion 33. Preferably the lug is so positioned above the surface of end portion 33 that when a tag is positioned on the needle the thickness of the tag tends to fill the gap between the leading pointed end of the lug 36 and the flat area 33a of the end portion 33.

It has been found that a needle having a leading end portion configured as shown in Figures 1 and 2 results in a clean opening of minimum proportions formed in the ear of an animal during application of the tag. The positioning of the lug 36, its proportions and shape together with the aforementioned location of the tag between flat 33a and lug 36 overcomes the tendency of the pins or projections (which correspond to lug 36) of prior art applicators from ripping a subsidiary opening in the ear as they pass through. This factor also assists in keeping the opening in the ear to a minimum.

Located within an elongate open ended recess 37 in elongate member 21 is a spring 38 which is mounted at one end to a pin 39 carried by the elongate member 21. The other end of spring 38 is anchored to a lug 40 which projects from plate 43 through an opening in the closed end 41 of tubular cover 22. This spring 38 thereby applies a retracting force to the elongate member 21 so that when the handle 12 is released by the operator the elongate member 21 and handle 12 are restored to their normal state as shown in Figure 1 of the drawings.

The engagement means of the applicator tool is formed by a pressure plate 44 which conveniently is formed as part of the free end of the anvil 14. A vertically orientated elongated open-ended slot 45 is formed in the pressure pad 44 and opens into an elongate recess 46 in anvil 42.

In use of the applicator tool a trocar type tag having a headed portion with an opening therein is attached to the needle 29 by the opening in the head being engaged with lug 36. The applicator tool according to this invention is particularly useful for applying an ear tag of the type disclosed in our New Zealand Patent Specification No. 195287.

With the head portion of the ear tag retained on the lug 36 the animal's ear is located between the extremity 35 of needle 29 and pressure pad 44. As lever 12 is moved toward handle 11 the needle 29 advances toward the animal's ear and engages with the ear so that the ear comes sandwiched between

the extremity of the needle and the pressure pad 44. The continued advancement of the needle 29 causes the profiled end of the needle to pass through the animal's ear and draw with it the head portion of the tag. As the head portion of the tag is of a greater width than the width of slot 45 in the pressure pad 44 the head portion is caused to fold down either side of the needle 29 and thus be compacted so that only a relatively small opening is formed in the animal's ear. It will be noted that the length of cutting edge 35 is only slightly less than the width of the slot 45 so that when the head portion of the tag folds down as aforesaid the combined width of cutting edge and cross-sectional thickness of the folded down portion of the head of the tag is substantially the same as the width of slot 45. This ensures that not only is the initial slit which is cut by cutting edge 35 sufficient to accommodate passage of the needle and compacted head portion but that the head portion is compacted as much as possible as it passes through the formed slit.

Once the head portion has passed through the ear the needle 29 is retracted thereby removing the needle from the ear. Should the animal's head move once the tag has been applied but the needle not removed such movement will result in the needle pivoting about the pivot pin 32. This pivoting movement thereby minimises damage to the animal's ear and at the same time allows the pin to be withdrawn from the ear. In normal use of the applicator tool the operator would, immediately the head portion has passed through the ear, move the applicator tool downwardly away from the ear so that the needle 29 can pivot in the direction of arrow A thereby ensuring that the pin is removed as quickly as possible from the animal's ear.

The applicator tool is open to modification and one such modification is the repositioning of the pressure pad 44 and needle 29. In such a modification the needle, which has a substantially foreshortened body 30, is pivotally mounted to the extreme end of the anvil 14 so that is projects backwardly toward the body 10. A pressure pad with its associated slot is then formed in the end of the elongate member 21. With such an arrangement during use of the applicator the pressure pad advances towards the ear and thereby engages the ear to push the ear onto the needle. The needle passes through the animal's ear, the slot in the pressure pad and into the elongate recess in the elongate member 21. Once again the needle 29 is pivotally mounted but with a return spring so that the needle is normally held in the operative position.

The applicator tool of the present invention is an extremely effective means of applying a trocar type tag as it causes the portion of the tag to be passed through the animal's ear to compact during application thereby ensuring that only a minimum size wound is formed in the ear. Whilst it is preferred that the pressure pad/needle be moved recilinearly toward the needle/pressure pad this is by no means essential.

The construction of the applicator tool is such that most of the componentry thereof can be formed from a suitably reinforced plastics material. In a preferred form of the invention the body 10, lever 12, anvil 14, end cap 17, elongate member 21, quadrant 24, anchorage 43/40 and cover tube 22 are all formed of a suitable plastics material. With such a construction only the needle 29, link 26 and pivot pins are constructed from metal. One arrangement for pivotable mounting of the lever 12 and toothed quadrant 24 is shown in Figure 3 of the drawings wherein a portion of the side wall 10a of body 10 is shown in conjunction with a portion of the upper part of lever 12. In the drawing there is shown the pivot pin 13 for the lever 12 which is formed of a plastics material which snap fits through aligned openings in the wall 10a and lever 12. The pivot pin 25 of the quadrant 24 is journalled in a snap fitting cap 48 in an opening in the side wall 10a of body 10.

M&C FOLIO: 799P49066                    WANGDOC: 0232R

CLAIMS

1.   An applicator tool for applying an ear tag to an animal comprising retention means (33,36) adapted to, in use, retain a part of an animal ear tag and pass it through an animal's ear, means (44) to engage an animal's ear on a side opposite to that which the retention means first penetrates, means (12,26,24,21) to cause relative movement of the retention means (33,36) and engagement means (44) toward one another, said engagement means (44) being adapted (45) to cause at least a portion of the ear tag part retained by the retention means to be compacted during the passage through the ear of an animal.

2.   An applicator tool as claimed in claim 1 wherein the engagement means (44) is mounted by an anvil (14) which is coupled to the body (10) of the applicator, said moving means being a body mounted lever (12) which is connected to a movable element (21) slidingly mounted with said body (10), said retention means being mounted by said movable element.

3.   An applicator tool as claimed in claim 2 wherein said lever (12) is pivotally mounted with said body (10) and is coupled to a toothed quadrant (24) which is in engagement with a toothed rack (23) associated with said movable element (21).

11a

4. An applicator tool as claimed in claim 2 or 3 further including biassing means (38) which bias said movable element (21) to a position where the retention means (35,36) is located at the furthermost point of travel from the engagement means (44).

5. An applicator tool as claimed in any one of the preceding claims wherein said engagement means consists of a pressure ────────────────────────────

pad (44) which can bear against an animal's ear, said pressure pad including an opening (45) through which said retention means can pass, said opening (45) being of a dimension transverse to the line of relative movement between the engagement means (44) and retention means (35,36) which is less than the transverse width of the ear tag part held by the retention means.

6. An applicator tool as claimed in claim 2, 3 or 4 wherein the retention means is an elongate element (29) mounted by one end (30) to said movable element (21), the free end portion (33) of the elongate element (29) having a penetration leading end (35) and associated therewith a locating means (36) with which the ear tag part can be located and retained on said retention means.

7. An applicator tool as claimed in claim 6 wherein the elongate element (29) is pivotally mounted (32) to said movable element (21), there being restricting means (17) which prevent pivotal movement of said elongate element until said retention means (35,36) has reached a predetermined position relative to said engagement means (44) during application of a tag to an animal's ear.

8. An applicator tool as claimed in claim 6 or 7 wherein the penetration leading end (35) of the elongate element (29) is a cutting edge which is located transverse to the direction of relative movement of the retention means and engagement means.

9. An applicator tool as claimed in claim 8 wherein the free end portion (33) of the elongate member (29) is substantially spoon shaped and of greater transverse width than the transverse thickness of the elongate member (29), said locating means (36) being a forwardly projecting lug which is positioned above and rearwardly of the cutting edge.

FIG. 1.

0138570

FIG. 3

FIG. 4.

FIG. 2.